# EUROPÄISCHE PATENTSCHRIFT

(11) **EP 4 323 595 B1**
(45) Veröffentlichungstag und Bekanntmachung des Hinweises auf die Patenterteilung: **19.03.2025**
(21) Anmeldenummer: 22714870.7
(22) Anmeldetag: 17.03.2022
(51) Int. Cl.: E03F 5/04

(54) **ABLAUFVORRICHTUNG MIT EINEM JUSTIERBAREN TRÄGER FÜR EINE ABLAUF-ABDECKUNG**
DRAINAGE DEVICE WITH AN ADJUSTABLE CARRIER FOR A DRAIN COVER
DISPOSITIF DE DRAINAGE DOTÉ D'UN SUPPORT RÉGLABLE POUR UN COUVERCLE DE DRAIN

(43) Veröffentlichungstag der Anmeldung: 21.02.2024
(73) Patentinhaber: wedi GmbH, 48282 Emsdetten (DE)
(72) Erfinder: WEDI, Stephan, 48282 Emsdetten (DE)
(74) Vertreter: Dr. Träger & Strautmann PAe PartG mbB
(86) Internationale Anmeldenummer: PCT/EP2022/056950
(87) Internationale Veröffentlichungsnummer: WO 2023/174541

(56) Entgegenhaltungen:
- EP-A2- 1 561 868
- DE-A1- 102009 031 844
- KR-B1- 100 962 021

## Beschreibung

Die Erfindung betrifft eine Ablaufvorrichtung zum Einbau in eine Öffnung einer Bodenplatte nach dem Oberbegriff des Anspruchs 1 sowie eine Bodenplatte mit einer solchen Ablaufeinrichtung.

Unter einer Bodenplatte wird im vorliegenden Fall ein in einen Bauwerkskörper integrierbares System verstanden, welches Wasser sammelt und einer in die Bodenplatte integrierten Ablaufeinrichtung zuführt.

Derartige Bodenplatten sind für verschiedene Anwendungsfälle einsetzbar. Beispielsweise können sie im Sanitärbereich, insbesondere in Duschen, eingebaut werden. Sie können aber auch in anderen Arten von Nassräumen mit Bodenablauf, beispielsweise in Küchen, in öffentlichen Gebäuden wie Krankenhäusern oder in lebensmittelverarbeitenden Betrieben, wie Großküchen oder Schlachthäusern Verwendung finden. Darüber hinaus sind sie auch im Außenbereich, beispielsweise an Balkonen und Terrassen, einsetzbar.

Aus DE 10 2016 112 400 A1 ist ein Duschboden bekannt, der eine Bodenplatte (Trägerelement 12) und ein Deckschichtelement 17 umfasst. Das Deckschichtelement 17 kann einen in eine Öffnung eingesetzten Rahmen 20 mit einem Absatz 24 aufweisen. Die Öffnung des Deckschichtelements koinzidiert insoweit mit einer im Trägerelement 12 vorgesehenen Ablauföffnung 13, dass der Absatz 24 des Rahmens 20 in die Ablauföffnung 13 einführbar ist. Der Zusammenbau von Deckschichtelement 17 und Trägerelement 12 erfolgt durch Verkleben der beiden Teile. Nach dem Zusammenbau ist der Ablauf in seiner Position fixiert. Damit ist auch die Position einer auf die Ablauföffnung aufsetzbaren Abdeckung vordefiniert. Nur wenn Abdeckung und Deckschichtelement dieselbe Mittelachse aufweisen, ist eine die Abdeckung umgebende Fuge allseitig gleich breit. Nachteilig ist, dass bereits kleine Abweichungen der beiden Mittelachsen zueinander optisch auffallen, da dann die Außenseiten der Abdeckung umgebenden Fugen unterschiedlich breit sind.

Aus KR10-0962021 ist eine Ablaufvorrichtung mit den Merkmalen des Oberbegriffs von Anspruch 1 bekannt. Durch die Drehbarkeit des Abdeckungs- Halters kann dort jedoch bei ungeschickter Handhabe ein in den Halter eingeschraubtes Aufstockelement aus dem Halter heraus oder in ihn hineingeschraubt werden und damit die Höhenlage des Einlaufs falsch justiert werden. Aufgabe der Erfindung ist daher, die Ablaufvorrichtung der D1 dahingehend weiterzuentwickeln, dass ihre Montage weniger fehlerfanfällig wird.

Diese Aufgabe wird gelöst durch eine Ablaufvorrichtung zum Einbau in eine Öffnung einer Bodenplatte, vorzugsweise einer Duschbodenplatte, mit den Merkmalen des Anspruchs 1.

Die Ablaufvorrichtung umfasst:
- eine oberen Einlauföffnung, durch die Abwasser in die Ablaufvorrichtung eintreten kann,
- eine die obere Einlauföffnung begrenzende Abdeckung, die von einem Aufstockelement getragen wird,
- im Bodenbereich vormontierbare Teile, die strömungstechnisch mit einem Ablaufrohr verbindbar sind, so dass durch die Einlauföffnung hindurchgetretenes Abwasser in das Ablaufrohr gelangen kann.

Bei der Abdeckung kann es sich um ein aus Kunststoff oder Metall gefertigtes Teil handeln, das punktförmige, linienförmige oder sonst wie gestaltete Öffnungen zum Durchtritt von Abwasser aufweist. Unter Abwasser wird in diesem Zusammenhang jede Art von Flüssigkeit verstanden, die durch den Ablauf abgeleitet werden soll. Bei dem Abwasser kann es sich folglich beispielweise um Duschwasser (Einsatz im Sanitärbereich), Regenwasser (Einsatz im Außenbereich) oder um sonstige Flüssigkeiten wie Reinigungsmittel, Suspensionen, etc. (Einsatz im Industriebereich) handeln.

Die Abdeckung kann unmittelbar auf dem Aufstockelement angebracht sein. Zwischen Aufstockelement und Abdeckung können aber auch weitere Teile, beispielsweise Zwischenträger, angeordnet sein.

Die Ablaufvorrichtung weist weiterhin eine Justiereinrichtung auf, die die folgenden Komponenten umfasst:
- eine Aufnahme zum Einbau in die Bodenplatte mit einer Auflage und einer Innenkontur, welche einen Innendurchmesser aufweist;
- einen in die Aufnahme einsetzbaren Halter für das Aufstockelement der Abdeckung, wobei der Halter eine Außenkontur, eine Oberseite und eine Unterseite aufweist, und wobei die Außenkontur einen Außendurchmesser aufweist, der kleiner ist als der genannte Innendurchmesser der Aufnahme, so dass der in die Aufnahme eingesetzte Halter im vormontierten Zustand in einer horizontalen Richtung innerhalb eines horizontalen Spielbereichs beweglich ist,
- ein an die Aufnahme anbringbares Fixierelement mit einer Oberseite und einer Unterseite, welches eine Beweglichkeit des Halters gegenüber dem Fixierelement im vormontierten Zustand der Justiereinrichtung in vertikaler Richtung unter Beibelassung eines Spiels ermöglicht.

Mit dem genannten vormontierten Zustand der Justiereinrichtung ist der Zustand gemeint, in dem sich Aufnahme, Halter und Fixierelement befinden, nachdem der Halter in die Aufnahme eingesetzt und mittels des Fixierelements unter Beibelassung eines Spiels fixiert ist. Die so zusammengesetzte Justiereinrichtung ist Bestandteil der Ablaufvorrichtung. In dieser Ablaufvorrichtung ist der in die Aufnahme eingesetzte Halter so lange beweglich, bis er nach Einbau der Ablaufvorrichtung in eine Bodenplatte und Einbau der Bodenplatte an einem vorgesehenen Ort und nach einer Feinjustierung gegenüber dem umgebenden Bodenbelag letztlich an seiner endgültigen Position fixiert wird (montierter Zustand).

Im vormontierten Zustand bilden die Aufnahme und das Fixierelement eine Art Gehäuse um den Halter herum. Der Halter ist somit in dieser gehäuseartigen Struktur innerhalb eines vertikalen Spiels und eines horizontalen Spiels frei beweglich.

Diese Beweglichkeit des Halters ermöglicht eine Feinjustierung der Abdeckung gegenüber dem die Abdeckung umgebenden Boden nach dem Aufkleben eines Bodenbelags. Handelt es sich bei dem Bodenbelag, beispielsweise um Fliesen, ist es ausreichend, die Fliesen zunächst mit relativ großer Toleranz so aufzubringen, dass der Ablauf relativ grob innerhalb einer im Bodenbelag freigelassenen Fläche angeordnet ist. Konkret ergibt sich bei der Aufbringung des Bodenbelags ein Toleranzbereich, weil die Breite den Ablauf umgebenden Fugen nicht beim Fliesenlegen festgelegt wird, sondern durch das Feinjustieren des Ablaufs nach dem Aufbringen des Bodenbelags. Der genannte Toleranzbereich ist so groß, wie das Spiel des Abdeckplatten-Halters gegenüber der Aufnahme.

Nachdem der Bodenbelag aufgeklebt ist, befinden sich die für die Beweglichkeit des Halters - und damit die für die Beweglichkeit der direkt oder indirekt an den Halter gekoppelten Abdeckung - relevanten Bauteile weiterhin im vormontierten Zustand. Der Halter und die an den Halter direkt oder indirekt gekoppelte Abdeckung kann innerhalb des vorgesehenen Spiels manuell sehr einfach entweder nach Augenmaß oder unter Zuhilfenahme von Abstandshaltem gegenüber dem umgebenden Bodenbelag ausgerichtet bzw. feinjustiert werden.

Nach einer so erfolgten Feinjustierung kann die Position des Abdeckungsträgers final fixiert werden, indem die nunmehr gleichmäßig breit ausgerichteten Fugen mit einem geeigneten Kleber oder Mörtel ausgefüllt werden. Nach dem finalen Verkleben der Ablaufvorrichtung im Bodenbelag ist der Halter in der Aufnahme fixiert und das zuvor vorhandene Spiel nicht mehr gegeben. Die Ablaufvorrichtung befindet sich dann im montierten Zustand.

Vorzugsweise beträgt das horizontale Spiel des Halters gegenüber der Aufnahme im vormontierten Zustand in horizontaler Richtung wenigstens 1 mm, höchst vorzugsweise 3 mm bis 8 mm. Ein so gewähltes Spiel ist ausreichend, um die gewünschte Feinjustierung zu ermöglichen und zudem an die nach DIN 18 157 vorgesehenen Fugenbreiten angepasst. Unabhängig davon, ob Steingut, Feinsteinzeug oder Keramikfliesen verfugt werden sollen, empfiehlt die DIN 18 157 eine Fugenbreite, die abhängig von der Seitenlänge ihrer Fliese ist. Bis 150 mm Seitenlänge lassen sich Fugen in einer Breite von etwa 2 mm realisieren. Ab einer Seitenlänge von 150 mm und länger sollte eine Fugenbreite von wenigstens 2 mm bis hin zu 8 mm Breite gewählt werden.

Das vertikale Spiel des Halters zwischen Aufnahme und Fixierelement beträgt vorzugsweise 0,1 bis 2 mm. Ein solches Spiel ist einerseits ausreichend, damit der Halter nicht durch das Fixierelement eingeklemmt wird, andererseits ist es klein genug, um die Ablaufvorrichtung hinsichtlich ihrer Einbauhöhe insgesamt flach zu halten. Eine flache Einbauhöhe ist insbesondere bei Duschböden, die für einen bodengleichen Einbau vorgesehen sind, vorteilhaft.

In einer bevorzugten Ausführungsform weist der Halter ein Innengewinde und das Aufstockelement für die Abdeckung ein in das Innengewinde einschraubbares Außengewinde auf. Hierdurch ist es möglich, die Einbauhöhe des Aufstockelements gegenüber der Bodenplatte einzustellen. Da das Aufstockelement die Abdeckung trägt, ist somit die Höhenlage der Abdeckungs-Oberseite exakt an die Höhe des umgebenden Bodenbelags anpassbar. Die Ablaufvorrichtung ist deshalb unabhängig von der Dicke des eingesetzten Bodenbelags, bzw. kann an unterschiedlich dicke Bodenbeläge angepasst werden. Die Position der Abdeckung ist somit zusätzlich zur horizontalen Einstellbarkeit auch in vertikaler Richtung variierbar.

Vorzugsweise sind die Innenkontur der Aufnahme und/oder die Außenkontur des Halters rund. Sind beide Konturen rund, bildet die Innenkontur einen kleineren Zylinder und die Außenkontur einen größeren Zylinder, wobei der kleinere Zylinder im größeren Zylinder in horizontaler Richtung frei beweglich ist. Sind beide Konturen zylinderförmig, wird auf kleinem Raum ein in alle horizontalen Richtungen gleich großes Spiel realisiert.

Bei dem Fixierelement kann es sich vorzugsweise um einen Rastring handeln. Ein Rastring ist leicht handhabbar und sichert die Position des Halters im Gehäuse zuverlässig.

Das Fixierelement und die Aufnahme können mittels einer Rast- oder Schnappverbindung aneinander koppelbar sein. Mittels der Rast- oder Schnappverbindung, die lösbar oder unlösbar ausgeführt sein kann, lassen sich die genannten Bauteile auf einfache Art und Weise formschlüssig zusammenfügen.

Vorzugsweise wird die Rastverbindung durch wenigstens einen am Fixierelement vorgesehenen Vorsprung und wenigstens eine in der Aufnahme vorgesehene Vertiefung, in welche der genannte Vorsprung einrastbar ist, ausgebildet. Bei der Montage verformt sich der Vorsprung elastisch und verhakt sich anschließend in der Vertiefung der Aufnahme.

Erfindungsgemäß ist an der Oberseite des Halters eine Vertiefung vorgesehen. Weiterhin ist vorgesehen, dass das Fixierelement einen in die Vertiefung einsetzbaren Vorsprung aufweist, welcher im montierten Zustand innerhalb der Vertiefung angeordnet ist. Hierdurch wird das Spiel des Halters gegenüber dem Fixierelement in horizontaler Richtung begrenzt. Der Halter - und damit auch eine an den Halter gekoppelte Abdeckung - ist somit innerhalb des zunächst vorgesehenen horizontalen Spiels nicht mehr frei bewegbar. Das zunächst vorhandene Spiel wird vielmehr durch die Kombination aus Vertiefung am Halter und Vorsprung am Fixierelement nochmals begrenzt. Im Ergebnis ist ein Halter mit Vorsprung nur noch so beweglich, wie es die Größe der Vertiefung zulässt.

Der Vorteil dieser Begrenzung liegt darin, dass der Abdeckungs-Halter zwar immer noch in alle horizontalen Richtungen bewegt werden kann, um so die gewünschte Feinjustierung durchzuführen, er kann aber nicht mehr gedreht werden. Hierdurch wird verhindert, dass bei ungeschickter Handhabe ein in den Halter eingeschraubtes Aufstockelement für die Abdeckung aus dem Halter herausgeschraubt wird.

Weiterhin können das Fixierelement und/oder der Halter eine oder mehrere Öffnungen zum Durchlass von Sickerwasser aufweisen. Hintergrund ist, dass in ungünstigen Fällen, beispielsweise bei gealterten oder sonst wie schadhaften Fugen, im Bodenbelag kleinste Wassermengen, die auch als Sickerwasser bezeichnet werden, durch die Fugen unter den Bodenbelag gelangen können. Dort sind sie dann gefangen und trocknen nur äußerst schwer ab.

Bei der hier beschriebenen Ablaufvorrichtung wird das Aufstockelement in den Halter hineingeschraubt. Der Halter - und auch das Fixierelement - umgeben den Abwasserstrom somit von außerhalb. Dieser äußere Bereich grenzt an die die Ablaufvorrichtung umgebenden Fugen an. Indem in Halter und/oder Fixierelement Öffnungen vorgesehen sind, ist es möglich, etwaiges Sickerwasser von außerhalb des Ablaufes durch die Öffnungen zu leiten und dem Abwasserstrom zuzuführen. Durch das Ableiten des Sickerwassers wird die Gefahr von Wasserschäden im Estrich und im Ablaufbereich insgesamt reduziert.

Die erfindungsgemäße Aufgabe wird weiterhin gelöst durch eine Bodenplatte, vorzugsweise

Duschbodenplatte, die eine Ablaufvorrichtung nach einem der Ansprüche 1 bis 9 umfasst. In der Duschbodenplatte kann die Ablaufvorrichtung ganz oder teilweise vormontiert sein. Auch bei einer solchen Bodenplatte ist im vormontierten Zustand die erfindungsgemäße Beweglichkeit der Abdeckung, bzw. die Beweglichkeit der die Abdeckung tragenden und haltenden Teile, gegenüber der Bodenplatte vorhanden. Das heißt: Es kann zunächst die Bodenplatte eingebaut werden, anschließend kann der Bodenbelag aufgebracht werden und nach dem Aufbringen des Bodenbelages kann die Abdeckung in Bezug auf den umgebenden Bodenbelag feinjustiert und dann in der gewünschten Position durch Einbringen von Kleber endgültig fixiert werden.

Weitere, die Erfindung verbessernde Maßnahmen werden nachstehend mit der Beschreibung von bevorzugten Ausführungsbeispielen der Erfindung anhand der Figuren näher dargestellt.

Die Figuren zeigen:
- Fig. 1: zeigt eine in eine Bodenplatte eingebaute Ablaufvorrichtung in einer perspektivischen Schnittdarstellung;
- Fig. 2: zeigt die Bodenplatte mit Ablaufvorrichtung gemäß Fig. 1 in einer Seitenansicht im Schnitt;
- Fig. 3: zeigt eine Bodenplatte und eine in die Bodenplatte einbaubare Ablaufvorrichtung in einer Explosionsdarstellung;
- Fig. 4: zeigt einige Komponenten der Ablaufvorrichtung, die gemeinsam eine Justiereinrichtung bilden in einer geschnittenen Seitenansicht;
- Fig. 5: zeigt eine Ausschnittsvergrößerung aus Fig. 4;
- Fig. 6: zeigt die Komponenten gemäß Fig. 4 in einer geschnittenen perspektivischen Ansicht;
- Fig. 7: zeigt eine Ausschnittsvergrößerung aus Fig. 6;
- Fig. 8: zeigt ein Fixierelement in Form eines Rastrings in einer Ansicht von oben;
- Fig. 9: zeigt das Fixierelement gemäß Fig. 8 in einer Ansicht von unten;
- Fig. 10: zeigt ein Aufstockelement für eine Abdeckung in einer perspektivischen Ansicht;
- Fig. 11: zeigt einen Halter für das in Fig. 10 gezeigte Aufstockelement in einer perspektivischen Ansicht;
- Fig. 12: zeigt eine in eine Bodenplatte eingebaute Aufnahme in einer perspektivischen Ansicht;
- Fig. 13: zeigt die Aufnahme gemäß Fig. 12 mit eingebautem Halter gemäß Fig. 11 in einer perspektivischen Ansicht;
- Fig. 14: zeigt die Aufnahme mit Halter und Rastring im vormontierten Zustand in einer perspektivischen Ansicht;
- Fig. 15: zeigt einen an eine Aufnahme gekoppelten Adapter in einer perspektivischen Darstellung;
- Fig. 16: zeigt den an die Aufnahme gekoppelten Adapter gemäß Fig. 15 in einer perspektivischen Schnittdarstellung;
- Fig. 17: zeigt das Basisteil des Adapters in einer perspektivischen Darstellung;
- Fig. 18: zeigt das Basisteil des Adapters gemäß Fig. 17 in einer perspektivischen Schnittdarstellung;
- Fig. 19: zeigt den Spacer des Adapters in einer perspektivischen Darstellung;
- Fig. 20: zeigt den Spacer des Adapters gemäß Fig. 19 in einer perspektivischen Schnittdarstellung;
- Fig. 21: zeigt den Dichtring des Adapters in einer perspektivischen Darstellung;
- Fig. 22: zeigt den Pressring des Adapters in einer perspektivischen Darstellung;
- Fig. 23: zeigt ein in einen Adapter einsetzbares Einsatzteil.

Die im Weiteren verwendeten Begriffe: "obere", "oben", "untere", "linke" oder "rechte" beziehen sich auf die in der Zeichnung dargestellte Anordnung der Komponenten der Ablaufvorrichtung, die der Anordnung im Betriebsmodus entspricht.

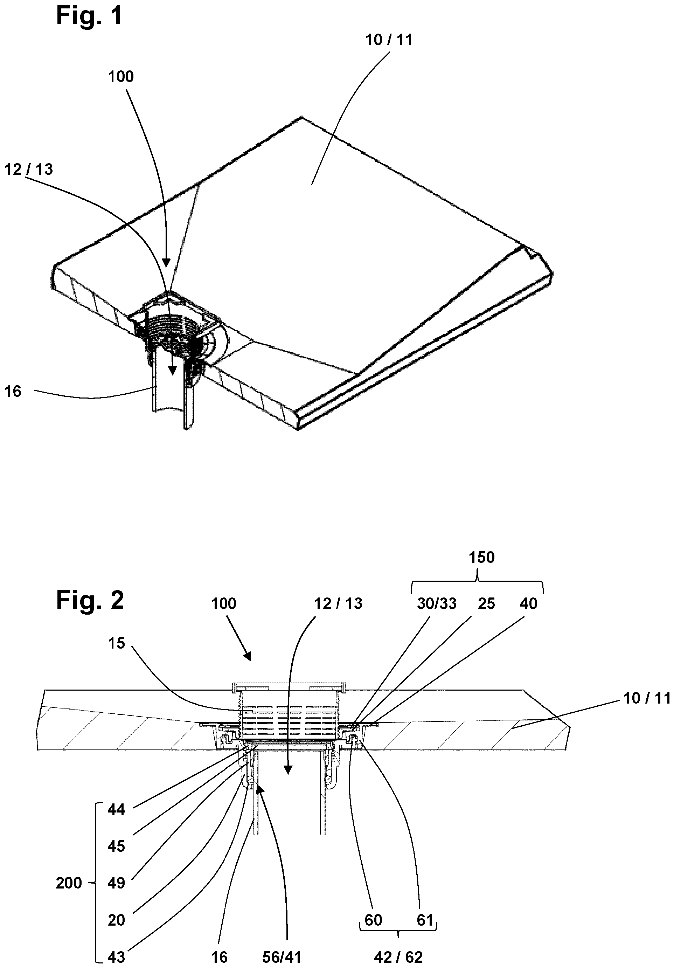

Figur 1 zeigt eine in eine Bodenplatte 10 eingebaute Ablaufvorrichtung 100 in einer Schnittdarstellung. Bei der Bodenplatte 10 handelt es sich im dargestellten Ausführungsbeispiel um eine Duschbodenplatte 11, die ein in Richtung einer

Einlauföffnung 13 weisendes Gefälle aufweist. Durch die Einlauföffnung 13 eintretendes Abwasser wird einem sich an die Ablaufvorrichtung 100 anschließenden Rohrsystem 16 zugeführt.

Bei dem dargestellten Ausführungsbeispiel handelt es sich um eine in einen Sanitärraum eingebauten Ablaufvorrichtung 100, die in eine Öffnung 12 der Duschbodenplatte 11 eingebaut ist. Die gezeigte Ablaufvorrichtung 100 umfasst keinen in den Ablauftopf integrierten Geruchsverschluss. Bei anderen Ausführungsbeispielen kann auch vorgesehen sein, dass die Ablaufvorrichtung selbst einen Geruchsverschluss umfasst.

Figur 2 zeigt die Duschbodenplatte 11 mit der Ablaufvorrichtung 100 in einer Schnittdarstellung. Auf das Ablaufrohr 16 ist ein Adapter 200 aufgesteckt und an einer ersten Koppelstelle 41 mittels einer Pressverbindung 56 fixiert. An einer zweiten Koppelstelle 42 ist der Adapter 200 mittels einer Schraubverbindung 62 mit einer Aufnahme 40 verschraubt. In die Schraubverbindung 62 ist ein Bajonettverschluss 63 integriert. Der Bajonettverschluss 63 erleichtert die Ausrichtung der miteinander zu verschraubenden Bauteile.

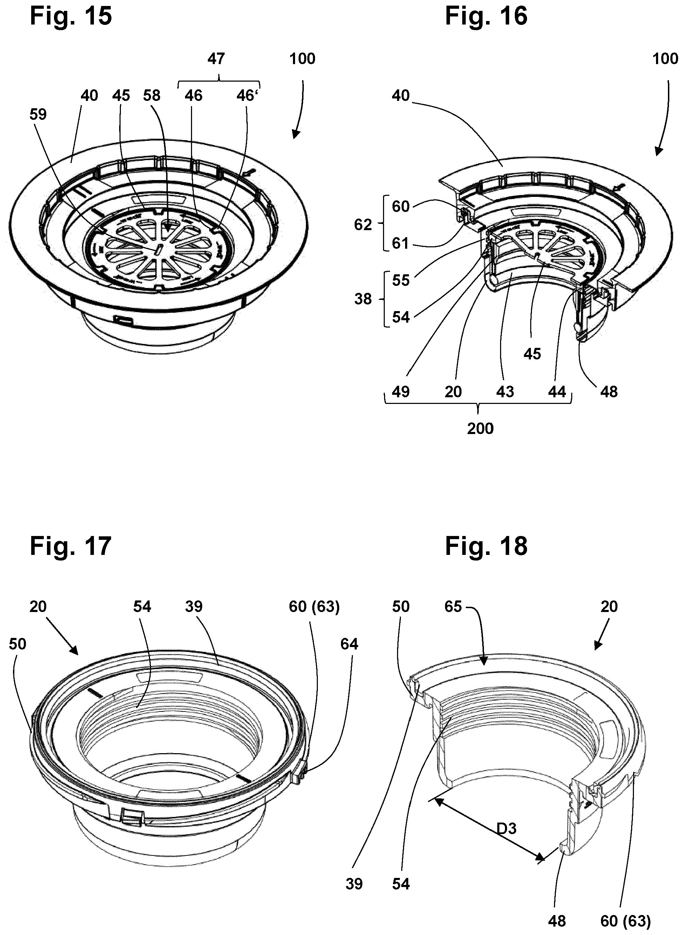

Weitere Details des Adapters 200 werden weiter unten im Zusammenhang mit den Figuren 15 bis 23 näher erläutert.

Die Aufnahme 40 bildet gemeinsam mit einem Halter 25 und einem Fixierelement 30, bei dem es sich im vorliegenden Fall um einen Rastring 33 handelt, eine Justiereinrichtung 150. Der Halter 25 der Justiereinrichtung 150 ist über ein Gewinde mit einem Aufstockelement 15 verbunden. Auf dem Aufstockelement 15 kann ein Zwischenträger 66 angeordnet sein, auf dem eine Abdeckung 14 zum Verschließen der Einlauföffnung 13 vorgesehen ist. Die Abdeckung 14 ist zur Durchführung von Reinigungs- und Wartungsarbeiten abnehmbar. Im fertigmontierten Zustand ist die Oberfläche der Abdeckung 14 vorzugsweise bündig zur Oberfläche eines auf dem Duschbodens 11 angebrachten Belages, bei dem es sich beispielsweise um Bodenfliesen handeln kann, ausgerichtet.

Die Bündigkeit von Abdeckung 14 zur Oberfläche des Duschbodenbelages wird beim Einbau des Duschbodens 11 einjustiert. In Figur 2 ist zu sehen, dass das Aufstockelement 15 die Oberfläche des Duschbodens 11 deutlich überragt. Das liegt daran, dass die Höhe des Aufstockelements 15 im Ausgangsstadium zunächst sehr großzügig dimensioniert ist, um auch die Verwendung dicker Bodenbeläge zu ermöglichen. Um die Höhe des Aufstockelements 15 grob an die Höhe eines ausgewählten Bodenbelages anzupassen, wird das Aufstockelement 15 deshalb zunächst an seiner Unterseite so eingekürzt, dass es in etwa an die Höhe des ausgewählten Bodenbelages angepasst ist. Die millimeter- oder sogar zehntelmillimetergenaue Höhen-Feinjustierung erfolgt nach Aufbringen des Bodenbelages mittels der Gewindeverbindung von Aufstockelement 15 und Halter 25.

Die Justiereinrichtung 150 ermöglicht zum einen die beschriebene Höhenausrichtung und zum anderen eine horizontale Justierung der Abdeckung 14 zur gleichmäßigen Ausrichtung gegenüber den die Abdeckung 14 umgebenden Fugen.

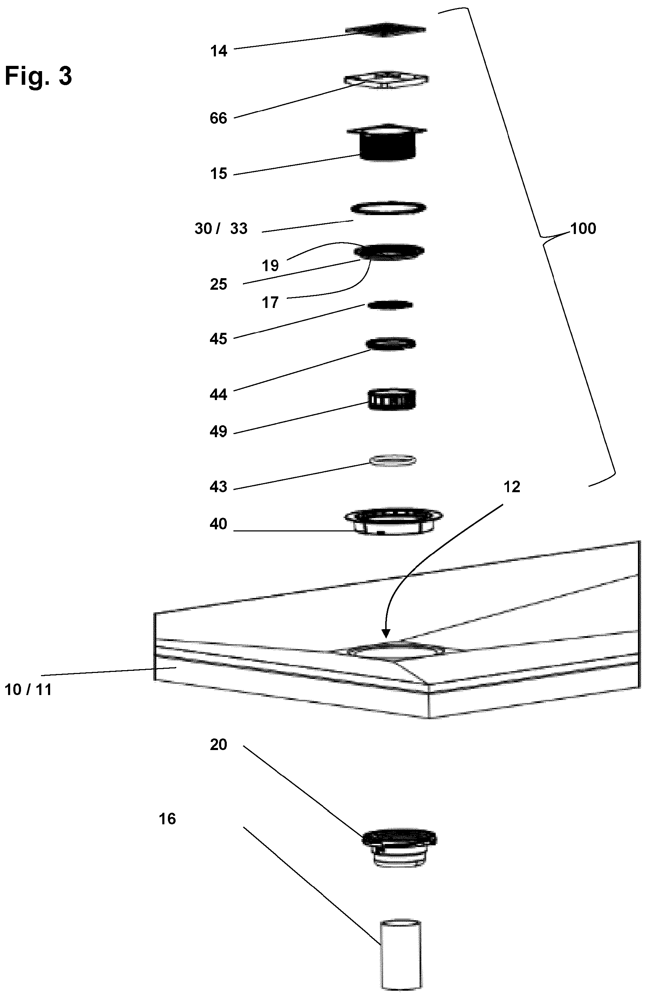

Figur 3 zeigt die Bauteile der Ablaufvorrichtung 100 in einer Explosionsdarstellung. Die Abdeckung 14 ist vorzugsweise formschlüssig auf einen im dargestellten Ausführungsbeispiel vorgesehenen Zwischenträger 66 auflegbar. Der Zwischenträger 66 kann ebenfalls Formschluss-Konturen aufweisen und somit formschlüssig auf das Aufstockelement 15 auflegbar sein.

Das Aufstockelement 15 weist ein Außengewinde 17 auf, das in ein Innengewinde 29 des Halters 25 einschraubbar ist.

Der Halter 25 wird in einem vormontierten Zustand Z1 in einer gehäuseartigen Struktur gehalten und ist in dieser gehäuseartigen Struktur beweglich. Die gehäuseartige Struktur befindet sich in einem Bereich zwischen dem Fixierelement 30 - im vorliegenden Fall: dem Rastring 33 - und der Aufnahme 40.

Im dargestellten Ausführungsbeispiel ist die Aufnahme 40 von oben in die Öffnung 12 der Bodenplatte 10 einlegbar. Zur Montage der Ablaufvorrichtung 100 werden auch der Halter 25, der Rastring 33, das Aufstockelement 15, der Zwischenträger 66 und die Abdeckung 14 von oben in die Ablaufvorrichtung 100 eingesetzt und sind bei Bedarf, beispielsweise für Reinigungsarbeiten, einfach demontierbar.

Dahingegen wird ein am Adapter 200 vorgesehenes Basisteil 20 zunächst von unten an der bereits in die Bodenplatte 10 eingesetzten Aufnahme 40 befestigt. Anschließend ist die Bodenplatte 10 mit eingesetzter Aufnahme 40 und dem an der Unterseite der Aufnahme 40 befestigten Basisteil 20 des Adapters 200 auf das Ablaufrohr 16 aufsteckbar. Die Fixierung des Basisteils 20 auf dem Ablaufrohr 16 erfolgt mittels der Pressverbindung 56, die durch den Dichtring 43, den Spacer 49, den Pressring 44 und das Einsatzteil 45 gebildet wird. Die genaue Funktionsweise wird weiter unten näher erläutert.

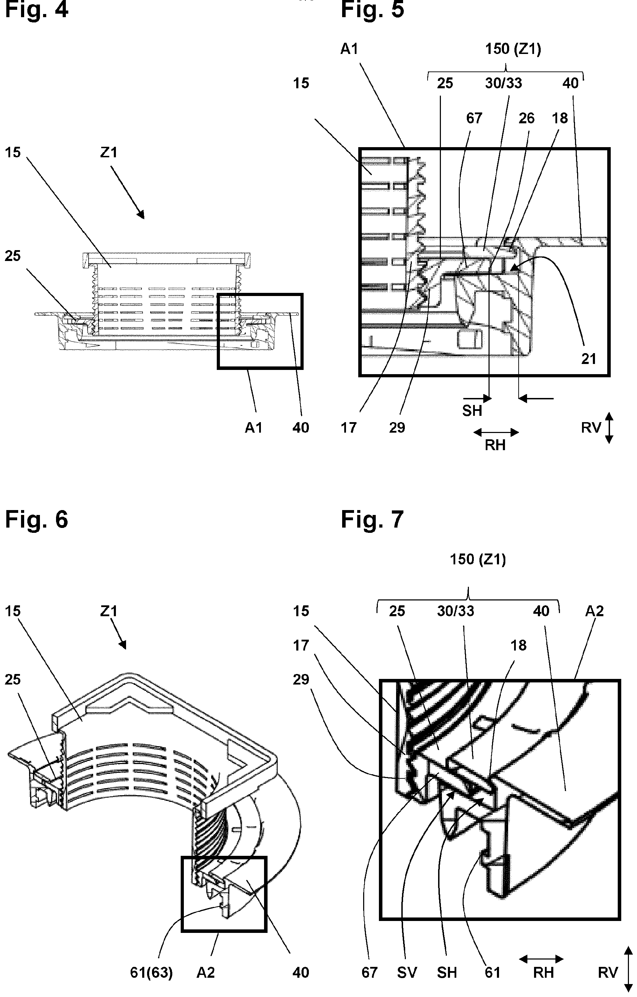

Die Figuren 5 bis 8 erläutern den Aufbau und die Funktionsweise der Justiereinrichtung 150. Dabei zeigt Fig. 5 einen vergrößerten Ausschnitt A1 aus Fig. 4 und Fig. 7 einen vergrößerten Ausschnitt A2 aus Fig. 6.

Die Justiereinrichtung 150 ist im vormontierten Zustand Z1 dargestellt. In diesem vormontierten Zustand Z1 ist das Aufstockelement 15 mit seinem Außengewinde 17 in das Innengewinde 29 des Halters 25 eingeschraubt.

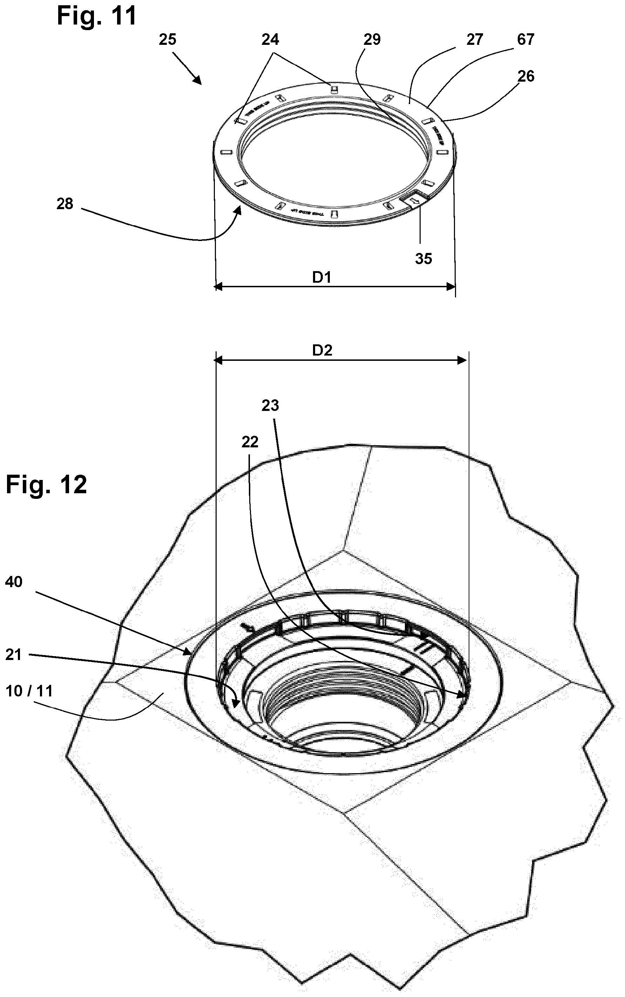

Der Halter 25 weist einen umlaufenden Flansch 67 mit einer Außenkontur 26 auf. Der Flansch 67 liegt im vormontierten Zustand Z1 auf einer in der Aufnahme 40 vorhandenen Auflagefläche 21 (vgl. Fig. 12) auf. Oberhalb des Flansches 26 ist ein mit Vorsprüngen 34 versehener Rastring 33 in zu den Vorsprüngen 34 kompatiblen Vertiefungen 23 der Aufnahme 40 eingerastet. Die Vorsprünge 34 und die Vertiefungen 23 bilden eine Rastverbindung 18 zwischen Rastring 33 und Aufnahme 40.

Rastring 33 und Aufnahme 40 bilden somit eine gehäuseartige Struktur, die in etwa die Form eines liegenden U bzw. einer umlaufenden, zur Mittelachse hin geöffneten Nut hat. Diese Nut umschießt im vormontierten Zustand Z1 den Flansch des Halters 25. Der Halter 25 - und damit auch das Aufstockelement 15 - sind in horizontaler Richtung RH und vertikaler Richtung RV innerhalb der Nut beweglich. Diese Beweglichkeit drückt sich aus durch ein horizontales Spiel SH, das im dargestellten Ausführungsbeispiel 5 mm beträgt sowie ein vertikales Spiel SV, welches weniger als 1 mm beträgt und dazu dient, ein Einklemmen des Flansches 67 zwischen Rastring 33 und Aufnahme 40 zu verhindern.

Das horizontale und das vertikale Spiel bleiben solange erhalten, bis ein Bodenbelag auf die Duschbodenplatte 11 aufgebracht ist. Das heißt: Im Rahmen der Bautätigkeiten werden zunächst die Bodenplatte 10 und die Ablaufvorrichtung 100 installiert. Nachdem die Bodenplatte an Ort und Stelle sitzt und an die Rohrleitung 16 angeschlossen ist, wird ein Bodenbelag (in den Zeichnungen nicht dargestellt) auf die Bodenplatte aufgebracht. Nach Aufbringen des Bodenbelages ist zum einen die Höhenlage der auf dem Aufstockelement 15 aufgelegten Abdeckung 14 durch Einschrauben des Aufstockelements 15 in den Halter 25 exakt an die Höhe des Bodenbelages anpassbar. Weiterhin ist auch die horizontale Positionierung der Abdeckung 14 feinjustierbar, da die Justiereinrichtung 150 sich zu diesem Zeitpunkt nach wie vor im vormontierten Zustand Z1 befindet.

Nachdem die Position der Abdeckung 14 in vertikaler und horizontaler Richtung RV, RH feinjustiert worden ist, werden dann letztlich die noch offenen Fugen um die Abdeckung 14 herum mit einem geeigneten Mörtel verfugt. Damit wird die Justiervorrichtung 150 aus dem vormontierten Zustand Z1 in einen fertig montierten Zustand überführt. Im fertigmontierten Zustand ist die Justiervorrichtung 150 somit fixiert und lediglich die Abdeckung 14 ist noch aus ihrer Halterung demontierbar.

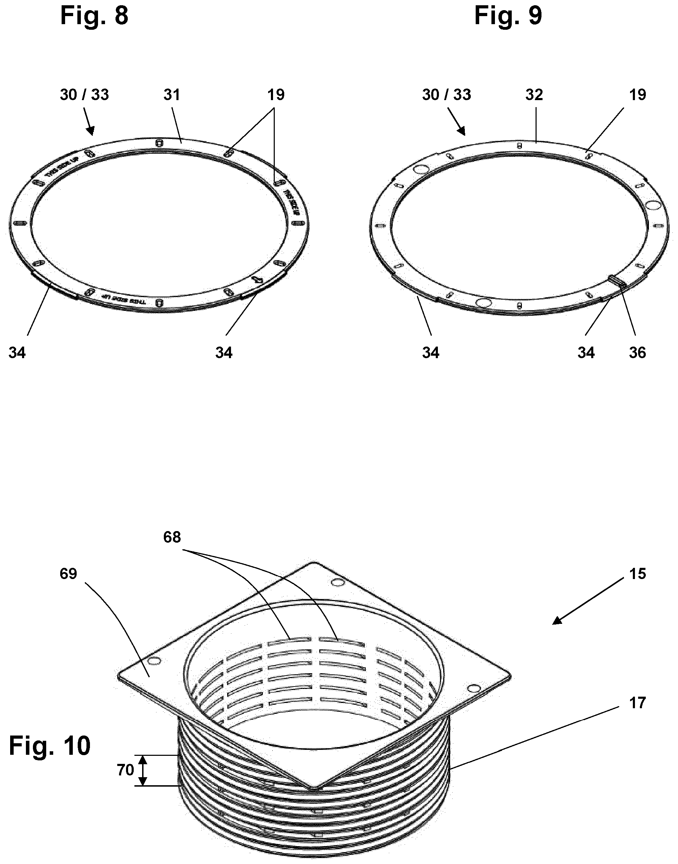

Die Figuren 8 und 9 zeigen ein Fixierelement 30 in Form eines Rastrings 33 in einer perspektivischen Ansicht von schräg oben (Fig. 8) und schräg unten (Fig. 9). Im dargestellten Ausführungsbeispiel ist der Rastring 33 aus einem flexiblen Kunststoff hergestellt und umfasst vier Vorsprünge 34, die in die dazu kompatiblen Vertiefungen 23 der Aufnahme 40 zur Herstellung einer Rastverbindung 18 einsteckbar sind. Weiterhin weist der Rastring 33 einige durchgehende Öffnungen 19 auf, die im fertigmontierten Zustand zur Ableitung von in den Ablauf eindringendem Sickerwasser dienen.

Fig. 9 zeigt zudem einen an der Unterseite 32 des Rastrings 33 angebrachten Vorsprung 36, der im vormontierten Zustand Z1 der Justiervorrichtung 150 in einer im Halter 25 angebrachten Vertiefung 35 angeordnet ist und dort das horizontale Spiel SH des Halters 25 begrenzt.

Fig. 10 zeigt das Aufstockelement 15, das eine rohrartige Kontur mit einem Außengewinde 17 und einem sich an die rohrartige Kontur anschließenden Flansch 69 aufweist. In die rohrartige Kontur sind Öffnungen 69 eingebracht, die analog zu den Öffnungen 19 im Rastring 33 zur Ableitung von Sickerwasser dienen. Die rohrartige Kontur ist, beispielsweise mit einem Cutter-Messer, an der Baustelle zur Anpassung an die Dicke eines aufzubringenden Bodenbelags um ein Längenstück 70 einkürzbar.

Fig. 11 zeigt den Halter 25, der ebenfalls Öffnungen 24 zur Ableitung von Sickerwasser aufweist. Der Halter 25 weist ein Innengewinde 29 auf, in welches das Aufstockelement 15 einschraubbar ist. Weiterhin umfasst der Halter 25 die bereits angesprochene Vertiefung 35 zur Begrenzung seiner Beweglichkeit in horizontaler Richtung RH. Der Halter 25 weist weiterhin einen Flansch 67 mit einer kreisrunden Außenkontur 26 auf. Die Außenkontur 26 hat einen Durchmesser D1, der kleiner ist, als ein Durchmesser D2 der Aufnahme 40. Der Halter 25 ist somit in die Aufnahme 40 einsetzbar.

Die Figuren 12 bis 14 zeigen die Duschbodenplatte 11 mit eingesetzter Aufnahme 40 in unterschiedlichen Vormontage-Stadien.

In Figur 12 ist lediglich die Aufnahme 40 in die Öffnung 12 der Bodenplatte 10 eingesetzt. Von der unteren Seite der Bodenplatte 10 her ist das Basisteil 20 des Adapters 200 an der Aufnahme 40 angeschraubt. Die Aufnahme 40 hat eine Innenkontur 22 mit einer Auflagefläche 21 und Vertiefungen 23.

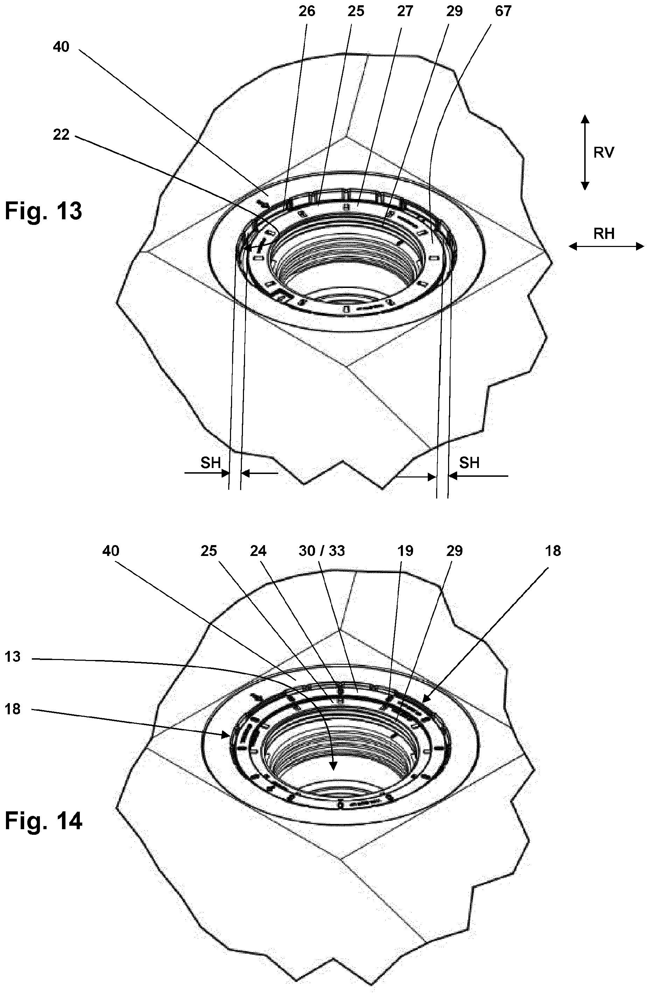

Figur 13 zeigt die Aufnahme 40 mit eingesetztem Halter 25. Der Halter 25 liegt mit seinem Flansch 67 auf der Auflagefläche 21 der Aufnahme 40 auf und ist in horizontaler Richtung RH innerhalb des horizontalen Spiels SH beweglich.

Fig. 14 zeigt die Aufnahme 40 mit ein montiertem Rastring 33. Der Rastring 33 ist über die Rastverbindung 18 lösbar mit der Aufnahme 40 verbunden. Diese Einbausituation stellt den vormontierten Zustand Z1 dar, in dem der Halter 25 (in Fig. 14 nicht dargestellt) in der aus Rastring 33 und Aufnahme 40 gebildeten gehäuseartigen Struktur beweglich und damit bei Bedarf justierbar ist.

Die Figuren 15 bis 23 zeigen den bereits weiter oben angesprochenen Adapter 200 und dessen Bauteile. Der Adapter 200 dient dazu, eine in die Bodenplatte 10 eingesetzten Wassereinlauf wasserdicht an das Ablaufrohr 16 zu koppeln. Der Adapter 200 hat somit zwei Koppelstellen, nämlich die erste Koppelstelle 41, an der er an das Ablaufrohr 16 gekoppelt ist und die zweite Koppelstelle 42, an der er an den Wassereinlauf bzw. an die in den Wassereinlauf integrierte Aufnahme 40, gekoppelt ist (vgl. Fig. 2).

Im dargestellten Ausführungsbeispiel umfasst die Ablaufvorrichtung 100 sowohl eine Justiereinrichtung 150 als auch einen Adapter 200. Weiter oben sind bereits die Details der Aufnahme 40 mit speziellen Merkmalen zur Integration einer Justiereinrichtung 150 erläutert worden. Im Hinblick auf die Justiereinrichtung 150 ist es jedoch unerheblich, ob eine Ablaufvorrichtung, an der die Justiereinrichtung 150 eingesetzt werden soll, einen Adapter 200 umfasst. Analog dazu ist es im Hinblick auf den Adapter 200 auch unerheblich, ob die Ablaufvorrichtung 100 eine Justiereinrichtung 150 umfasst. Beide Baugruppen sind vielmehr universell entweder allein oder gemeinsam in eine Ablaufvorrichtung integrierbar.

Die Figuren 15 und 16 zeigen die Ablaufvorrichtung 100, die zum einen den Adapter 200 umfasst und zum anderen auch dazu vorgesehen ist, eine Justiereinrichtung 150 zu integrieren. Das ist daran ersichtlich, dass die in den Figuren 15 und 16 gezeigte Aufnahme 40 auch Merkmale der Justiereinrichtung 150 umfasst.

Wie bereits erwähnt umfasst der Adapter 200 zwei Koppelstellen 41 und 42. Die Funktion des Adapters 200 im Zusammenhang mit der ersten Koppelstelle 41 liegt darin, eine wasserdichte Verbindung zwischen Basisteil 20 und Ablaufrohr 16 herzustellen. Bei dieser festen Verbindung handelt es sich um die bereits im Zusammenhang mit Fig. 2 angesprochene Pressverbindung 56. In einer einfachen Ausführungsform kann vorgesehen sein, dass die Pressverbindung 56 gegenüber dem Ablaufrohr 16 allein durch einen Adapter mit den Bauteilen Basisteil 20, Dichtring 43 und Pressring 44 realisiert wird. Im dargestellten Ausführungsbeispiel umfasst der Adapter 200 jedoch weiterhin den Spacer 49 und das Einsatzteil 45.

Die Pressverbindung 56 wird realisiert durch eine Schraubverbindung 38. Die Schraubverbindung 38 wird ausgebildet durch ein am Basisteil 20 angeordnetes Innengewinde 54 und ein am Pressring 44 angeordnetes Außengewinde 55. Der Pressring 44 ist somit in das Basisteil 20 eindrehbar. Das Basisteil 20 weist an seiner Unterseite einen unteren Kragen 48 mit einem Innendurchmesser D3 auf, der kleiner ist, als ein am Dichtring 43 vorgesehener Außendurchmesser D4. Bei einem auf das Ablaufrohr 16 aufgesteckten Basisteil 20 mit auf dem Kragen angeordnetem Dichtring 43 kann der Dichtring 43 somit nach unten hin nicht aus dem Basisteil 20 herausgelangen. Er wird vielmehr eingequetscht, wenn der Klemmring 44 tief genug in das Basisteil 20 eingedreht wird. Durch das Verquetschen des Dichtrings 43 ist die bereits angesprochene Pressverbindung 56 realisierbar.

Bei dem in den Figuren 15 und 16 dargestellten Ausführungsbeispiel umfasst der Adapter 200 weiterhin den Spacer 49 und das Einsatzteil 45. Diese Teile sind für die Herstellung der Pressverbindung 56 jedoch nicht zwingend erforderlich. Die Pressverbindung 56 kann vielmehr auch hergestellt werden, indem der Pressring 44 ohne den als Abstandshalter fungierenden Spacer 49 unmittelbar gegen den Dichtring 43 gedrückt wird. Hierzu könnte der Pressring beispielsweise eine zylindrische Kontur aufweisen, die der Kontur des Spacers ähnelt, so dass der Pressring gleichzeitig als Abstandshalter und als Andrückmittel fungiert.

Auch die Einbeziehung eines Einsatzteils 45 in den Adapter 200 ist nicht zwingend erforderlich. Das Einsatzteil 45 ist zum Eindrehen des Pressringes 44 in das Basisteil 20 vorgesehen. Dieses Einsatzteil 45 umfasst Verbindungselemente 46' zur Herstellung einer formschlüssigen Verbindung 47 mit kompatiblen Verbindungselementen 46 am Pressring 44. Zudem umfasst das Einsatzteil 45 eine Aufnahme 59, bei der es sich im dargestellten Ausführungsbeispiel um einen Schlitz zum Ansetzen eines Schraubendrehers handelt. Mittels des Schraubendrehers lässt sich das Einsatzteil 45 und der an das Einsatzteil gekoppelte Pressring 44 einfach in das Basisteil 20 eindrehen.

Das Einsatzteil 45 bildet somit eine Eindrehhilfe aus. Auch ohne Einsatzteil 45 ist der Pressring 44 in das Basisteil 20 eindrehbar. Falls ein Adapter 200 ohne Einsatzteil 45 eingesetzt werden soll, könnte der Pressring 44 beispielsweise einen Ansatz umfassen, auf den ein Eindrehwerkzeug direkt aufsetzbar ist, so dass eine ausreichend starke Pressverbindung auch ohne Verwendung eines Einsatzteils 45 herstellbar ist.

Die Figuren 17 und 18 zeigen das Basisteil 20 des Adapters 200. Am unteren Ende befindet sich der untere Kragen 48, der den Innendurchmesser D3 aufweist. Im montierten Zustand ist der Dichtring 43 auf dem unteren Kragen 48 angeordnet. Weiterhin ist zu erkennen, dass das Basisteil 20 einen oberen Kragen 50 mit einer U-förmigen Vertiefung 65 aufweist, in die eine Dichtung 39 eingeklebt ist.

Das Basisteil 20 weist ein am oberen Kragen 50 angeordnetes Außengewinde 60 auf, das gemeinsam mit einem an der Aufnahme 40 angeordneten Innengewinde 61 eine Schraubverbindung 62 und damit die zweite Koppelstelle 42 bildet. Um diese Koppelstelle 42 wasserdicht abzudichten ist im dargestellten Ausführungsbeispiel die in das Basisteil 20 eingeklebte kreisrunde Dichtung 39 vorgesehen. Beim Eindrehen des Außengewindes 60 in das Innengewinde 61, also beim Eindrehen des Basisteils 20 in die Aufnahme 40, wird die Dichtung 39 gegen eine in der Aufnahme 40 vorgesehene kreisrunde Kontur gedrückt. Mit zunehmender Eindrehtiefe wird die Dichtung 39 so weit komprimiert, dass durch die Ablaufvorrichtung 100 ablaufendes Wasser nicht an der zweiten Koppelstelle 42 aus der Ablaufvorrichtung 100 austreten kann, sondern die zweite Koppelstelle 42 vielmehr zuverlässig abgedichtet ist.

Das Außengewinde 60 ist am oberen Kragen 50 des Basisteils 20 angeordnet und umfasst einen Teil eines Bajonettverschlusses 63. Der andere Teil des Bajonettverschlusses 63 ist in das Innengewinde 61 der Aufnahme 40 integriert (vgl. Fig. 7). Am oberen Kragen 50 befindet sich eine Raste 64, die dann, wenn das Basisteil 20 ausreichend tief in die Aufnahme 40 eingedreht ist, in eine an der Aufnahme 40 vorgesehene Vertiefung einrastet. Das Einrasten der Raste 64 ist beim Eindrehen spürbar, so dass die Person, die die Ablaufvorrichtung 100 montiert, ein haptisches und/oder akustisches Signal für das Erreichen der vordefinierten Eindrehtiefe erhält. Zudem lässt sich das Basisteil 20 nach dem Einrasten der Raste 64 nur noch dann aus der Aufnahme 40 herausdrehen, wenn die Raste 64 zuvor, beispielsweise mittels eines Schraubendrehers, aus der Vertiefung herausgedrückt worden ist. Die Raste 64 sichert das Basisteil 20 somit gegen unbeabsichtigtes Herausdrehen.

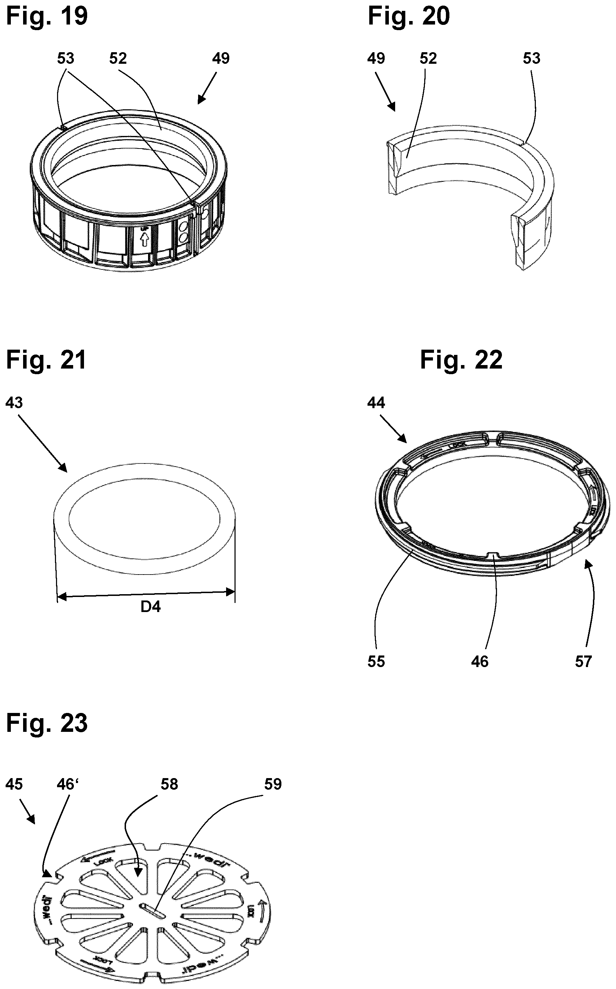

Die Figuren 19 und 20 zeigen den im dargestellten Ausführungsbeispiel vorgesehenen Spacer 49. Der Spacer 49 hat eine zylindrische Form und fungiert als Abstandshalter zwischen Pressring 44 und Dichtring 43. Beim Eindrehen des Pressrings 44 wird der Spacer 49 linear entlang seiner Mittelachse in das Basisteil 20 eingeschoben und drückt schließlich auf den Dichtring 43. Der Dichtring 43 stützt sich wiederum auf dem unteren Kragen 48 des Basisteils 20 ab und wird durch das Einschrauben des Pressrings 44 gequetscht und bildet die Pressverbindung 56. Der Spacer 49 umfasst im dargestellten Ausführungsbeispiel zudem einen eingeklebten Dichtring 52, der so dimensioniert ist, dass er im montierten Zustand eine widerstandsarme Presspassung mit dem Ablaufrohr 16 bildet.

Der Spacer 49 weist zudem zwei Solltrennstellen 53 auf, an denen er, beispielsweise mittels eines Cuttermessers, leicht in zwei halbschalenartige Einzelteile trennbar ist. Wie weiter oben bereits erläutert ist eine solche Teilung des Spacers 49 insbesondere dann hilfreich, wenn bei der Montage versehentlich vergessen wurde, einen Spacer 49 in das Basisteil 20 einzusetzen und zudem die obere Einlauföffnung der Ablaufvorrichtung 100 zu klein ist, um den Spacer 49 nachträglich hindurchzuschieben und am vorgesehenen Ort zu platzieren. Ein in zwei Halbschalen geteilter Spacer 49 kann somit auch durch eine für einen ungeteilten Spacer 49 zu kleine Einlauföffnung geschoben werden.

Die Figur 21 zeigt den Dichtring 43, bei dem es sich um einen aus einem flexiblen Material hergestellten Standard-Dichtring mit einem Außendurchmesser D4 handelt.

Figur 22 zeigt den Pressring 44 mit den an der Oberseite angeordneten Verbindungselementen 46 zur Herstellung der formschlüssigen Verbindung 47 zum Einsatzteil 45. Weiterhin ist am Außengewindes 55 ein abgeflachter Bereich zu erkennen, der einen Teil des Bajonettverschlusses 63 bildet. Das zu diesem Außengewinde 55 kompatible Innengewinde 54 des Basisteils 20 weist analog hierzu ebenfalls einen abgeflachten Bereich auf. Werden Basisteil 20 und Pressring 44 mit leichtem Druck gedreht und geraten sie in die Stellung, in der sich die beiden abgeflachten Bereiche überlagem, rastet der Bajonettverschluss 63 ein und positioniert dabei Basisteil 20 und Pressring 44 so zueinander, dass die Gefahr eines Verkantens - und damit einhergehend: die Gefahr einer Gewindebeschädigung - reduziert wird.

Figur 23 zeigt das Einsatzteil 45 mit den Verbindungselementen 46', bei denen es sich im dargestellten Ausführungsbeispiel um in die äußere Kontur eingebrachte U-förmige Vertiefungen handelt. Weiterhin umfasst das Einsatzteil 45 Öffnungen 58, durch die das durch die Einlauföffnung eingetretene Abwasser in Richtung Ablaufrohr 16 strömen kann. Das Einsatzteil 45 dient somit nicht lediglich zum Einschrauben des Pressrings 44, sondern kann vielmehr nach dem Einschrauben des Pressrings 44 in der Ablaufvorrichtung 100 verbleiben. Hierdurch wird zum einen sichergestellt, dass das Einsatzteil 45 immer da ist, wenn eine Demontage, beispielsweise für Wartungsarbeiten, erforderlich ist. Zum anderen hat das Einsatzteil 45 eine siebartige Wirkung und reduziert Verstopfungsgefahren im Ablaufsystem.

Auf dem Einsatzteil 45 befinden sich weiterhin Pfeile, die die Drehrichtung zum Eindrehen des Pressrings 44 in das Basisteil 20 kennzeichnen. Im vorliegenden Fall ist vorgesehen, dass das Einsatzteil 45 - in Draufsicht gesehen - entgegen dem Uhrzeigersinn zu drehen ist, um die Pressverbindung 56 herzustellen. Wird das Einsatzteil 45 gedreht, so kann jedoch unter bestimmten Voraussetzungen, beispielweise bei einer schwergängigen Schraubverbindung 44, ein Teil des Drehmoments auf das Basisteil 20 übertragen werden. Es ist somit nicht ausgeschlossen, dass das Basisteil 20 sich mitdreht, wenn der Pressring 44 in das Basisteil 20 eingedreht wird. Das Basisteil 20 weist jedoch die weitere Schraubverbindung 62 auf, mittels derer es in die Aufnahme 40 eingeschraubt ist. Um zu verhindern, dass beim Eindrehen des Pressrings 20 die Schraubverbindung 62 gelöst wird, sind die Drehrichtungen der beiden Schraubverbindungen 38 und 62 so konzipiert, dass beim Festdrehen des Pressrings 44 in dem Fall, in dem ein Teil des Drehmoments auf die Schraubverbindung 62, also auf die Verbindungsstelle zur Aufnahme 40, übertragen wird, diese zweite Schraubverbindung 62 nicht etwa gelockert, sondern vielmehr zusätzlich festgezogen wird.

### Bezugszeichenliste

- 10: Bodenplatte
- 11: Duschbodenplatte
- 12: Öffnung (in 10 bzw. 11)
- 13: Einlauföffnung (in 100)
- 14: Abdeckung (für 13)
- 15: Aufstockelement (für 14)
- 16: Ablaufrohr
- 17: Außengewinde (von 15)
- 18: Rastverbindung
- 19: Öffnung (in 30)
- 20: Basisteil (von 200)
- 21: Auflage
- 22: Innenkontur (von 20)
- 23: Vertiefung (in 20)
- 24: Öffnung (in 25)
- 25: Halter (für 15)
- 26: Außenkontur (von 25)
- 27: Oberseite (von 25)
- 28: Unterseite (von 25)
- 29: Innengewinde (von 25)
- 30: Fixierelement
- 31: Oberseite (von30)
- 32: Unterseite (von 30)
- 33: Rastring
- 34: Vorsprung (an 30)
- 35: Vertiefung (in 25)
- 36: Vorsprung (an 30)
- 37: -
- 38: Schraubverbindung (von 44 und 20)
- 39: Dichtung (in 20)
- 40: Aufnahme
- 41: erste Koppelstelle
- 42: zweite Koppelstelle
- 43: Dichtring (in 200)
- 44: Pressring
- 45: Einsatzteil (Sieb)
- 46, 46': Verbindungselement
- 47: Verbindung (von 44 und 45)
- 48: unterer Kragen (an 20)
- 49: Spacer
- 50: oberer Kragen (an 20)
- 51: Rohrstutzen
- 52: Dichtung (in 49)
- 53: Solltrennstelle (an 49)
- 54: Innengewinde (an 20)
- 55: Außengewinde (an 44)
- 56: Pressverbindung
- 57: Bajonettverschluss
- 58: Öffnungen
- 59: Aufnahme (in 45)
- 60: Außengewinde (an 20)
- 61: Innengewinde (an 40)
- 62: Schraubverbindung (von 20 und 40)
- 63: Bajonettverschluss
- 64: Raste
- 65: Vertiefung (an 20)
- 66: Zwischenträger (unter 14)
- 67: Flansch (an 25)
- 68: Öffnungen (in 15)
- 69: Flansch (an 15)
- 70: Längenstück (an 15)

- 100: Ablaufvorrichtung
- 150: Justiereinrichtung
- 200: Adapter

- A1: Ausschnitt (aus Fig. 4)
- A2: Ausschnitt (aus Fig. 5)
- D1: Außendurchmesser (von 25)
- D2: Innendurchmesser (von 40)

- D3: Innendurchmesser (von 48)
- D4: Außendurchmesser (von 43)
- RH: Richtung (horizontal)
- RV: Richtung (vertikal)
- SH: Spiel (in horizontaler Richtung)
- SV: Spiel (in vertikaler Richtung)
- Z1: vormontierter Zustand

## Patentansprüche

1. Ablaufvorrichtung (100) zum Einbau in eine Öffnung (12) einer Bodenplatte (10), vorzugsweise einer Duschbodenplatte (11), umfassend:
- eine obere Einlauföffnung (13), durch die Abwasser in die Ablaufvorrichtung (100) eintreten kann,
- eine die obere Einlauföffnung (13) begrenzende Abdeckung (14), die von einem Aufstockelement (15) getragen wird,
- im Bodenbereich vormontierbare Teile, die strömungstechnisch mit einem Ablaufrohr (16) verbindbar sind, so dass durch die Einlauföffnung (13) hindurchgetretenes Abwasser in das Ablaufrohr (16) gelangen kann,
wobei die Ablaufvorrichtung (100) weiterhin eine Justiereinrichtung (150) mit folgenden Komponenten umfasst:
- eine Aufnahme (40) zum Einbau in die Bodenplatte (10) mit einer Auflage (21) und einer Innenkontur (22), welche einen Innendurchmesser (D2) aufweist;
- einen in die Aufnahme (40) einsetzbaren Halter (25) für das Aufstockelement (15), wobei der Halter (25) eine Außenkontur (26), eine Oberseite (27) und eine Unterseite (28) aufweist, und wobei die Außenkontur (26) einen Außendurchmesser (D1) aufweist, der kleiner ist als der Innendurchmesser (D2) der Aufnahme (40), so dass der in die Aufnahme (40) eingesetzte Halter (25) in einem vormontierten Zustand (Z1) in einer horizontaler Richtung (RH) innerhalb eines horizontalen Spielbereichs (SH) beweglich ist,
- ein an die Aufnahme (40) anbringbares Fixierelement (30) mit einer Oberseite (31) und einer Unterseite (32), welches eine Beweglichkeit des Halters (25) gegenüber dem Fixierelement (30) im vormontierten Zustand (Z1) in vertikaler Richtung (RV) unter Beibelassung eines Spiels (SV) ermöglicht,
**dadurch gekennzeichnet, dass** die Oberseite (27) des Halters (25) eine Vertiefung (35) aufweist und das Fixierelement (30) einen in die Vertiefung (35) einsetzbaren Vorsprung (36) aufweist, welcher im vormontierten Zustand (Z1) innerhalb der Vertiefung (35) angeordnet und das Spiel (SH) des Halters (25) gegenüber dem Fixierelement (30) in horizontaler Richtung (RH) begrenzt, so dass im vormontierten Zustand (Z1) von Aufnahme (40), Halter (25) und Fixierelement (30) der Halter (25) in der Aufnahme (40) innerhalb eines vertikalen Spiels (SV) und eines horizontalen Spiels (SH) frei beweglich ist.

2. Ablaufvorrichtung (100) nach Anspruch 1, **dadurch gekennzeichnet, dass** das horizontale Spiel (SH) des Halters (25) gegenüber der Aufnahme (40) im vormontierten Zustand (Z1) in horizontaler Richtung (RH) wenigstens 1 mm beträgt.

3. Ablaufvorrichtung (100) nach Anspruch 1 oder 2, **dadurch gekennzeichnet, dass** das vertikale Spiel (SV) des Halters (25) zwischen Aufnahme (40) und Fixierelemente (30) 0,1 mm bis 2 mm beträgt.

4. Ablaufvorrichtung (100) nach einem der Ansprüche 1 bis 3, **dadurch gekennzeichnet, dass** der Halter (25) ein Innengewinde (29) und das Aufstockelement (15) für die Abdeckung (14) ein in das Innengewinde (29) einschraubbares Außengewinde (17) aufweist, so dass die Einbauhöhe des Aufstockelements (15) gegenüber der Bodenplatte (10) einstellbar ist.

5. Ablaufvorrichtung (100) nach einem der Ansprüche 1 bis 4, **dadurch gekennzeichnet, dass** die Innenkontur (22) der Aufnahme (40) und/oder die Außenkontur (26) des Halters (25) rund sind.

6. Ablaufvorrichtung (100) nach einem der Ansprüche 1 bis 5, **dadurch gekennzeichnet, dass** als Fixierelement (30) ein Rastring (33) vorgesehen ist.

7. Ablaufvorrichtung (100) nach einem der Ansprüche 1 bis 6, **dadurch gekennzeichnet, dass** das Fixierelement (30) und die Aufnahme (40) mittels einer Rastverbindung (18) verbindbar sind.

8. Ablaufvorrichtung (100) nach Anspruch 7, **dadurch gekennzeichnet, dass** die Rastverbindung (18) durch wenigstens einen am Fixierelement (30) vorgesehenen Vorsprung (34) und wenigstens einer an der Aufnahme (40) vorgesehenen Vertiefung (23), in welche der Vorsprung (34) einrastbar ist, ausgebildet wird.

9. Ablaufvorrichtung (100) nach einem der Ansprüche 1 bis 8, **dadurch gekennzeichnet, dass** das Fixierelement (30) wenigstens eine Öffnung (19) und/oder der Halter (25) wenigstens eine Öffnung (24) zum Durchlass von Sickerwasser aufweisen.

10. Bodenplatte (10), vorzugsweise Duschbodenplatte (11), umfassend eine Ablaufvorrichtung (100) nach einem der Ansprüche 1 bis 9.

## Claims

1. A drain device (100) for installation in an opening (12) of a floor plate (10), preferably a shower floor plate (11), comprising:
- an upper inlet opening (13) through which waste water can enter the drain device (100),
- a cover (14) bounding the upper inlet opening (13) and carried by an extension element (15),
- parts pre-mountable in the floor area and fluidically connectable to a drainpipe (16), so that waste water passing through the inlet opening (13) can enter the drainpipe (16),
wherein the drain device (100) further comprises an adjusting device (150) with the following components:
- a receiver (40) for installation in the base plate (10) with a support (21) and an inner contour (22) which has an inner diameter (D2);
- a holder (25) for the extension element (15), which holder can be inserted into the receiver (40), wherein the holder (25) has an outer contour (26), an upper side (27) and a lower side (28), and wherein the outer contour (26) has an external diameter (D1) which is smaller than the internal diameter (D2) of the receiver (40), so that the holder (25) inserted into the receiver (40) is movable in a horizontal direction (RH) within a horizontal clearance range (SH) in a preassembled state (Z1),
- a fixing element (30) attachable to the receiver (40) and having an upper side (31) and a lower side (32), which fixing element (30) allows the holder (25) to be moved in the preassembled state (Z1) in the vertical direction (RV) relative to the fixing element (30), while leaving a clearance (SV),
**characterised in that** the upper side (27) of the holder (25) has a recess (35) and the fixing element (30) has a projection (36) which can be inserted into the recess (35) and which, in the preassembled state (Z1), is arranged within the recess (35) and limits the clearance (SH) of the holder (25) with respect to the fixing element (30) in the horizontal direction (RH), so that in the preassembled state (Z1) of the receiver (40), holder (25) and fixing element (30), the holder (25) is freely movable in the receiver (40) within a vertical clearance (SV) and a horizontal clearance (SH).

2. Drain device (100) according to claim 1, **characterised in that** the horizontal clearance (SH) of the holder (25) relative to the receiver (40) in the preassembled state (Z1) is at least 1 mm in the horizontal direction (RH).

3. Drain device (100) according to claim 1 or 2, **characterised in that** the vertical clearance (SV) of the holder (25) between the receiver (40) and the fixing element (30) is 0.1 mm to 2 mm.

4. Drain device (100) according to one of the claims 1 to 3, **characterised in that** the holder (25) has an internal screw thread (29) and the extension element (15) for the cover (14) has an external screw thread (17) that can be screwed into the internal screw thread (29), so that the installation height of the extension element (15) can be adjusted in relation to the base plate (10).

5. Drain device (100) according to one of the claims 1 to 4, **characterised in that** the inner contour (22) of the receiver (40) and/or the outer contour (26) of the holder (25) are round.

6. Drain device (100) according to one of the claims 1 to 5, **characterised in that** a locking ring (33) is provided as the fixing element (30).

7. Drain device (100) according to one of the claims 1 to 6, **characterised in that** the fixing element (30) and the receiver (40) can be connected by means of a locking connection (18).

8. Drain device (100) according to claim 7, **characterised in that** the latching connection (18) is formed by at least one projection (34) provided on the fixing element (30) and at least one recess (23) provided on the receiver (40), into which recess the projection (34) can be latched.

9. Drain device (100) according to one of claims 1 to 8, **characterised in that** the fixing element (30) has at least one opening (19) and/or the holder (25) has at least one opening (24) for the passage of seepage water.

10. Floor plate (10), preferably shower floor plate (11), comprising a drain device (100) according to one of claims 1 to 9.

## Revendications

1. Dispositif d'écoulement (100) à monter dans une ouverture (12) d'une plaque de fond (10), de préférence une plaque de fond de douche (11), comprenant :
- une ouverture d'entrée supérieure (13) à travers laquelle les eaux usées peuvent pénétrer dans le dispositif d'écoulement (100),
- un couvercle (14) délimitant l'ouverture d'entrée supérieure (13), qui est porté par un élément de rehaussement (15),
- des pièces pouvant être prémontées dans la zone du fond, qui peuvent être reliées à un tuyau de descente (16) du point de vue de la technique d'écoulement, de sorte que les eaux usées qui ont traversé l'ouverture d'entrée (13) peuvent parvenir dans le tuyau de descente (16),
cependent le dispositif d'écoulement (100) comprenant en outre un dispositif d'ajustement (150) avec les composants suivants :
- une réception (40) à monter dans la plaque de fond (10) avec un appui (21) et un contour intérieur (22), qui présente un diamètre intérieur (D2) ;
- un support (25) pouvant être inséré dans la réception (40) pour l'élément de rehaussement (15), le support (25) présentant un contour extérieur (26), une face supérieure (27) et une face inférieure (28), et le contour extérieur (26) présentant un diamètre extérieur (D1), qui est plus petit que le diamètre intérieur (D2) de la réception (40), de sorte que le support (25) inséré dans la réception (40) est mobile dans un état prémonté (Z1) dans une direction horizontale (RH) à l'intérieur d'une zone de cycle de manœuvre horizontale (SH),
- un élément de fixation (30) pouvant être monté sur la réception (40) avec une face supérieure (31) et une face inférieure (32), qui permet une mobilité du support (25) par rapport à l'élément de fixation (30) dans l'état prémonté (Z1) dans la direction verticale (RV) en laissant un cycle de manœuvre (SV),
**caractérisé en ce que** la face supérieure (27) du support (25) présente un renfoncement (35) et l'élément de fixation (30) présente une saillie (36) pouvant être insérée dans le renfoncement (35), laquelle est disposée à l'état prémonté (Z1) à l'intérieur du renfoncement (35) et limite le cycle de manœuvre (SH) du support (25) par rapport à l'élément de fixation (30) dans la direction horizontale (RH), de sorte qu'à l'état prémonté (Z1) de la réception (40), du support (25) et de l'élément de fixation (30), le support (25) peut se déplacer librement dans le logement (40) à l'intérieur d'un cycle de manœuvre vertical (SV) et d'un cycle de manœuvre horizontal (SH).

2. Dispositif d'écoulement (100) selon la revendication 1, **caractérisé en ce que** le jeu horizontal (SH) du support (25) par rapport à la réception (40) à l'état prémonté (Z1) est d'au moins 1 mm dans la direction horizontale (RH).

3. Dispositif d'écoulement (100) selon la revendication 1 ou 2, **caractérisé en ce que** le cycle de manoeuvre vertical (SV) du support (25) entre la réception (40) et l'élément de fixation (30) est de 0,1 mm à 2 mm.

4. Dispositif d'écoulement (100) selon l'une des revendications 1 à 3, **caractérisé en ce que** le support (25) présente un filetage intérieur (29) et l'élément de rehaussement (15) pour le couvercle (14) présente un filetage extérieur (17) pouvant être vissé dans le filetage intérieur (29), de sorte que la hauteur de montage de l'élément de rehaussement (15) par rapport à la plaque de fond (10) est réglable.

5. Dispositif d'écoulement (100) selon l'une des revendications 1 à 4, **caractérisé en ce que** le contour intérieur (22) de la réception (40) et/ou le contour extérieur (26) du support (25) sont ronds.

6. Dispositif d'écoulement (100) selon l'une des revendications 1 à 5, **caractérisé en ce qu'**il est prévu comme élément de fixation (30) un anneau d'arrêt (33).

7. Dispositif d'écoulement (100) selon l'une des revendications 1 à 6, **caractérisé en ce que** l'élément de fixation (30) et la réception (40) peuvent être reliés au moyen d'une liaison par encliquetage (18).

8. Dispositif d'écoulement (100) selon la revendication 7, **caractérisé en ce que** la liaison par encliquetage (18) est formée par au moins une saillie (34) prévue sur l'élément de fixation (30) et au moins un renfoncement (23) prévu sur la réception (40), dans lequel la saillie (34) peut être encliquetée.

9. Dispositif d'écoulement (100) selon l'une des revendications 1 à 8, **caractérisé en ce que** l'élément de fixation (30) présente au moins une ouverture (19) et/ou le support (25) au moins une ouverture (24) pour le passage de l'eau d'infiltration.

10. Plaque de fond (10), de préférence plaque de fond de douche (11), comprenant un dispositif d'écoulement (100) selon l'une des revendications 1 à 9.
